# FASCICULE DE BREVET EUROPEEN

(11) **EP 0 818 366 B1**
(45) Date de publication et mention de la délivrance du brevet: **08.05.2002**
(21) Numéro de dépôt: 97401564.6
(22) Date de dépôt: 02.07.1997
(51) Int. Cl.: B60R 21/22

(54) **Agencement d'un module à sac gonflable dans un élément de siège de véhicule automobile**
Luftsackmodul-Anordnung in einem Fahrzeugsitzteil
Arrangement of an airbag module in part of a seat in a motor vehicle

(30) Priorité: 12.07.1996 FR 9608775
(43) Date de publication de la demande: 14.01.1998
(73) Titulaire: FAURECIA SIEGES D'AUTOMOBILES S.A., 92100 Boulogne (FR)
(72) Inventeur: Fourrey, François, 45290 Nogent Sur Vernisson (FR); Rouhier, Valérie, 45290 Nogent Sur Vernisson (FR)
(74) Mandataire: Burbaud, Eric

(56) Documents cités:
- EP-A- 0 768 215
- DE-A- 1 800 621
- DE-A- 4 231 523
- GB-A- 2 272 670
- US-A- 3 632 132
- US-A- 3 663 035

## Description

La présente invention concerne un agencement d'un module à sac gonflable dans un élément de siège automobile.

Il est connu d'intégrer un module à sac gonflable dans un dossier de siège de véhicule automobile, plus particulièrement dans un bourrelet latéral de ce dossier.

Un module à sac gonflable comprend généralement un sac associé à un générateur de gaz de gonflage de celui-ci dont le fonctionnement est contrôlé par un détonateur.

Le module à sac gonflable est habituellement logé dans un boîtier agencé dans le rembourrage du bourrelet latéral. Ce boîtier étant relativement encombrant, on ne monte généralement l'ensemble boîtier-module que dans un dossier de siège volumineux de haute gamme.

De plus, le confort d'un dossier muni d'un boîtier-module à sac gonflable est parfois altéré par la faible épaisseur de rembourrage recouvrant le boîtier.

Pour minimiser cette altération de confort, il faut prévoir un boîtier et un module à sac gonflable de dimensions et de formes parfaitement adaptées à chaque type de siège, ce qui empêche toute standardisation du module et augmente les coûts de fabrication d'un siège équipé de ce module.

L'invention a pour but d'agencer un module à sac gonflable dans un siège de véhicule automobile de dimensions éventuellement réduites, ceci sans altérer le confort du siège et en utilisant un module s'adaptant facilement à un type quelconque de siège.

A cet effet, l'invention a pour objet un agencement d'un module à sac gonflable dans un élément de siège de véhicule automobile, le module comprenant un sac gonflable et un générateur de gaz de gonflage de ce sac, l'élément de siège comprenant un coussin muni d'un rembourrage, caractérisé en ce que le sac comprend une partie, interne au rembourrage, qui est reliée au générateur de gaz, et une partie, externe au rembourrage, comportant au moins une poche qui est destinée à se déployer par gonflage et qui est, avant gonflage, étalée sur le rembourrage de manière à le recouvrir sur une surface la plus grande possible par aplatissement de la poche dégonflée pour épouser la forme générale du rembourrage.

Suivant des caractéristiques de différents modes de réalisation de l'invention :
- la partie externe étalée du sac est au moins partiellement logée dans un évidement ménagé dans le contour du rembourrage, de manière à affleurer ce contour ;
- le générateur de gaz est logé dans la partie interne du sac ;
- l'élément de siège comprend une coiffe recouvrant le rembourrage, et la partie externe étalée du sac est interposée entre le rembourrage et la coiffe ;
- la coiffe comprend une couture frangible qui s'étend au droit de la partie externe étalée du sac et qui est destinée à se déchirer lors du gonflage de ce sac ;
- l'élément de siège comprend une coiffe recouvrant le rembourrage, et la partie externe du sac forme une pièce de cette coiffe reliée au reste de la coiffe par des coutures frangibles destinées à se déchirer lors du gonflage du sac ;
- la partie externe du sac comprend au moins deux poches successives, une des poches communiquant avec la partie interne du sac par l'intermédiaire de l'autre poche ;
- l'élément de siège est un dossier muni d'au moins un bourrelet latéral sur lequel est étalée la partie externe du sac ;
- la partie externe du sac est munie d'au moins une poche qui, après gonflage, a une forme générale ovoïde allongée sensiblement verticalement, cette poche assurant une protection latérale du thorax d'un occupant assis dans le siège ;
- la poche est munie d'une extrémité supérieure communiquant avec une poche supplémentaire, ayant par exemple une forme générale prismatique après gonflage, assurant une protection latérale de la tête de l'occupant.

L'invention sera mieux comprise à la lecture de la description qui va suivre donnée uniquement à titre d'exemple et faite en se référant aux dessins annexés dans lesquels :
- la figure 1 est une vue en perspective d'un dossier de siège de véhicule automobile dans lequel est agencé, selon un premier mode de réalisation de l'invention, un module à sac gonflable ;
- la figure 2 est une vue en coupe suivant un plan sensiblement horizontal, à échelle agrandie, d'un bourrelet latéral du siège représenté à la figure 1, la partie externe du sac gonflable étant en position étalée;
- la figure 3 est une vue similaire à la figure 2, dans laquelle la partie externe du sac gonflable est en position déployée, après gonflage ;
- la figure 4 est une vue similaire à la figure 1, dans laquelle la partie externe du sac gonflable est en position déployée, après gonflage ;
- la figure 5 est une vue similaire à la figure 4 représentant une variante de réalisation du sac gonflable;
- les figures 6 et 7 sont des vues similaires aux figures 1 et 2 respectivement, représentant un dossier de siège de véhicule automobile dans lequel est agencé, selon un second mode de réalisation de l'invention, un module à sac gonflable.

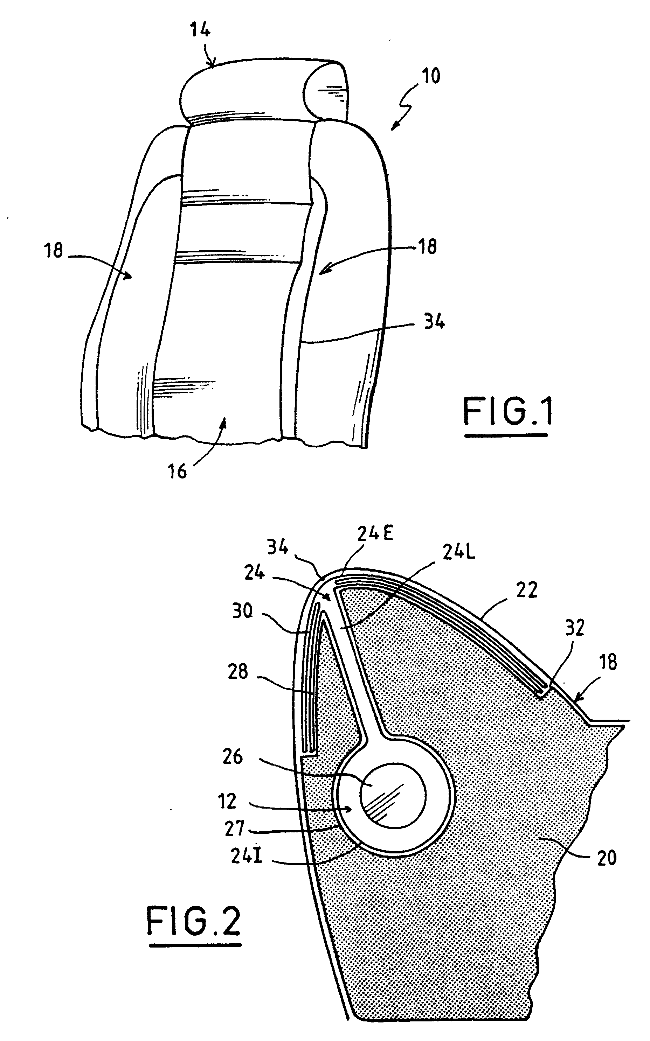

On a représenté sur les figures 1 et 2 un dossier 10 de siège de véhicule automobile dans lequel est agencé, selon un premier mode de réalisation de l'invention, un module 12 à sac gonflable.

De façon classique, le dossier 10 comporte un appui-tête 14 surmontant un coussin 16 muni de deux bourrelets latéraux 18.

Le coussin est muni d'un rembourrage 20 recouvert par une coiffe 22.

Le module 12 est logé dans le bourrelet latéral gauche 18 en considérant les orientations habituelles d'un occupant assis dans le siège.

En se référant à la figure 2, on voit que le module 12 comprend un sac gonflable 24 associé à un générateur 26 de gaz de gonflage de ce sac, de forme générale cylindrique.

On notera qu'il n'y a pas de rembourrage 20 à l'intérieur du sac 24.

De façon classique, le fonctionnement du générateur de gaz 26 est contrôlé par un détonateur qui n'est pas représenté sur les figures.

Le sac 24 comprend une partie 24I interne au rembourrage 20 et une partie 24E externe à ce rembourrage qui est destinée à se déployer par gonflage.

Le générateur de gaz 26 est logé à l'intérieur de la partie interne 24I du sac, en étant fixé de façon connue en soi sur une armature (non représentée) du dossier 10.

La partie interne 24I du sac, de forme générale cylindrique, est logée dans un évidement 27 de forme complémentaire ménagé dans le rembourrage 20.

La partie externe 24E du sac comprend au moins une poche gonflable, par exemple deux poches successives 28, 30.

Une première poche 28 est raccordée à la partie interne 24I du sac par une partie de liaison 24L de ce sac ayant une section transversale sensiblement rectangulaire et allongée suivant une direction sensiblement parallèle au générateur de gaz 26 de forme générale cylindrique.

La seconde poche 30 communique avec la partie interne 24I du sac par l'intermédiaire de la première poche 28.

Sur la figure 2, le sac 24 est représenté dans un état dégonflé, sa partie externe 24E étant étalée sur le rembourrage 20 du bourrelet gauche 18. Dans cette configuration de la partie externe 24E, chaque poche 28,30 est étalée sur le rembourrage 20 de manière à le recouvrir sur une surface la plus grande possible par aplatissement de la poche dégonflée pour épouser la forme générale du rembourrage 20. Les deux poches successives sont aplaties l'une sur l'autre. Ainsi, la partie externe 24E du sac recouvre et épouse la forme générale du bourrelet.

De préférence, la partie externe étalée 24E du sac est au moins partiellement logée dans un évidement 32 ménagé dans le contour du rembourrage 20 du bourrelet. De cette façon, la partie externe 24E du sac affleure et prolonge ce contour.

Selon le premier mode de réalisation de l'invention illustré sur les figures 1 et 2, la partie externe 24E du sac est interposée entre le rembourrage 20 et la coiffe 22.

Une couture frangible 34 est ménagée sur la coiffe 18 au droit de la partie externe 24E du sac afin de se déchirer lors du gonflage de ce sac pour permettre le déploiement de ce dernier.

La forme des poches 28, 30 est adaptée au contour du bourrelet 18 afin de pouvoir être convenablement étalées sur le contour du rembourrage 20. De cette façon, l'épaisseur de la partie externe 24E entre le rembourrage 20 et la coiffe 22 du sac est minimisée.

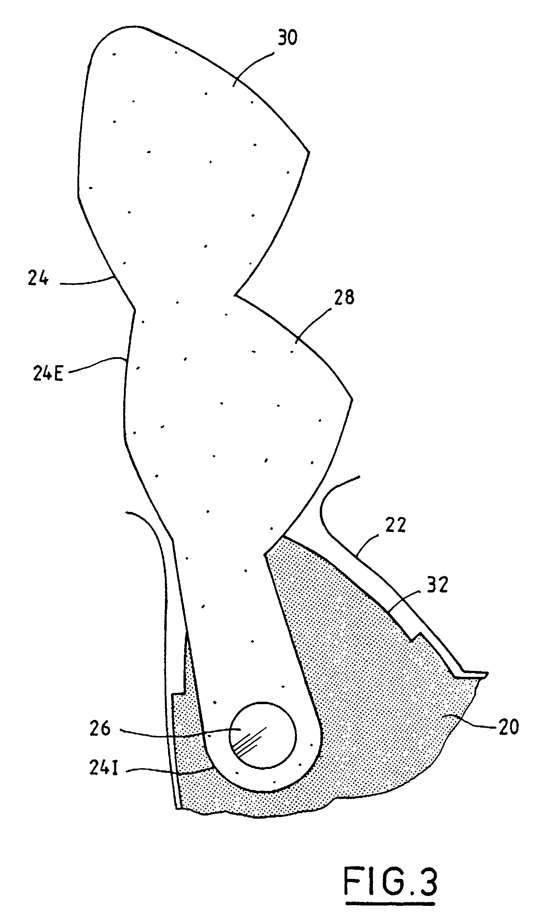

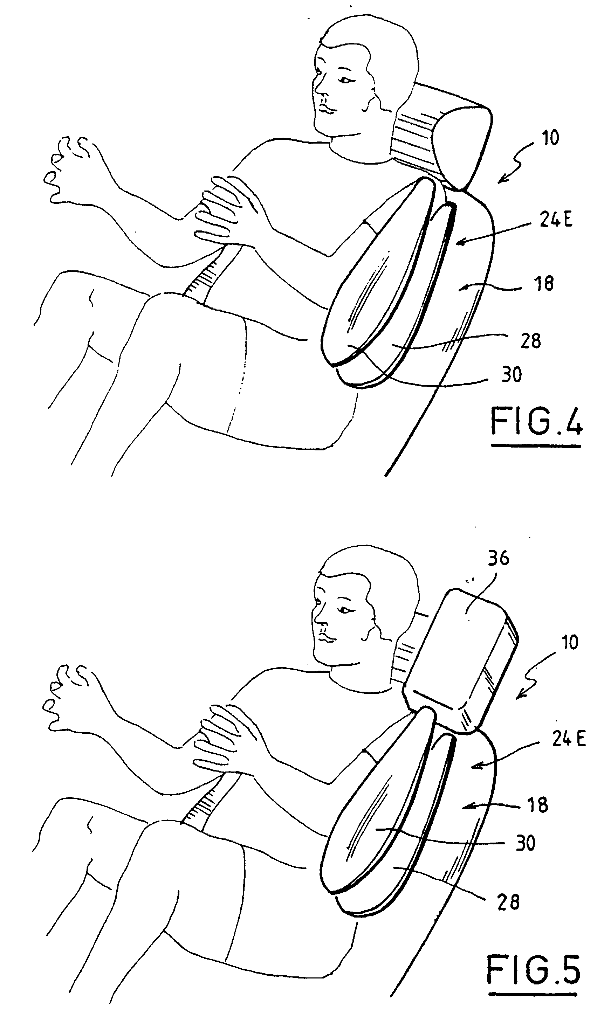

Sur les figures 3 et 4, on a représenté la partie externe 24E du sac en position déployée, après gonflage, à la suite d'un choc latéral subi par le siège.

La coiffe 22 s'est déchirée au niveau de la couture 34 de manière à permettre le déploiement de la partie externe 24E du sac dans une direction sensiblement parallèle à la direction longitudinale du siège.

Après gonflage, chaque poche 28, 30 a une forme générale ovoïde allongée sensiblement verticalement de manière à assurer une protection latérale du thorax d'un occupant assis dans le siège.

Les formes ovoïdes des poches gonflées correspondent à des formes sensiblement ovales de ces poches lorsque ces dernières sont dégonflées et plaquées contre le bourrelet latéral 18.

Sur la figure 5, on a représenté une variante de réalisation de la partie externe 24E du sac.

Dans ce cas, cette partie externe 24E comporte une troisième poche 36, ayant par exemple une forme générale prismatique après gonflage, communiquant avec les extrémités supérieures des autres poches 28, 30.

La troisième poche 36 assure une protection latérale de la tête de l'occupant.

Lorsque la partie externe 24E du sac est dégonflée, la troisième poche 36 est repliée sur les deux autres.

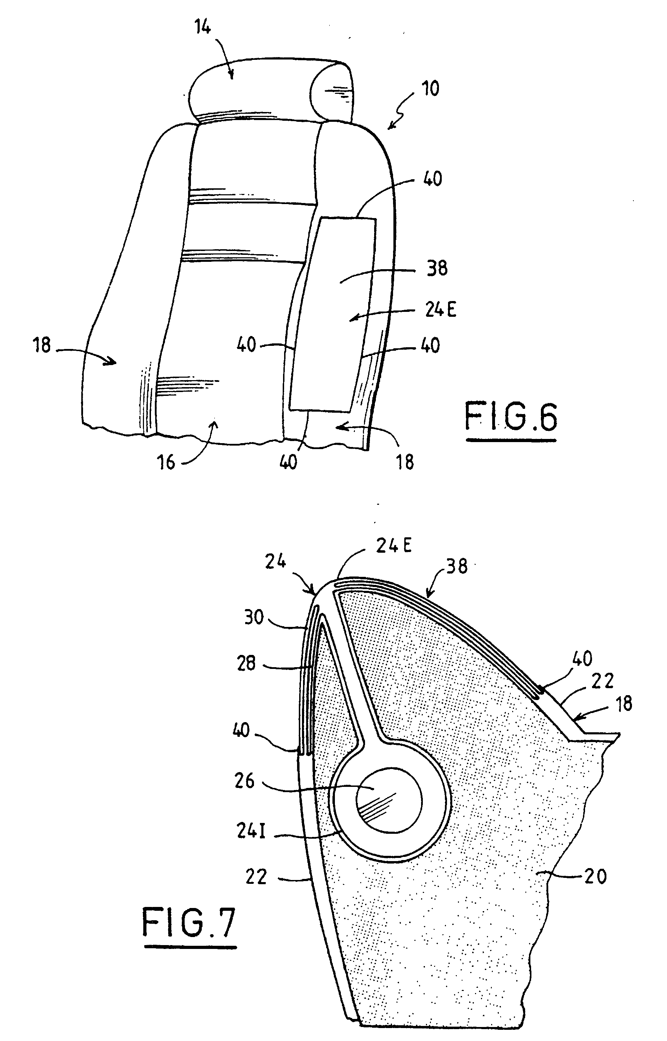

Sur les figures 6 et 7, on a représenté un agencement du module 12 à sac gonflable dans le bourrelet 18, selon un second mode de réalisation de l'invention.

Dans ce cas, la partie externe 24E du sac forme une pièce 38 de la coiffe 22 reliée au reste de cette coiffe par des coutures frangibles 40 destinées à se déchirer lors du gonflage du sac.

La pièce 38 est formée par exemple par la paroi du sac lui-même délimitant la poche 30 la plus à l'extérieur de la matelassure 20 ou bien par une pièce de tissu ou de matériau équivalent de même nature que la coiffe 18, collée sur la poche 30.

L'invention ne se limite pas aux modes de réalisation illustrés sur les figures.

En particulier, le module à sac gonflable peut être agencé selon l'invention dans un autre élément de siège que le dossier, par exemple dans un bourrelet latéral de l'assise ou encore dans l'appui-tête du siège dans le but de protéger un passager assis derrière ce siège.

De plus, la partie externe 24E du sac peut comporter un nombre varié de poches égal ou supérieur à l'unité.

L'invention comporte de nombreux avantages.

En particulier, le sac gonflable peut être agencé selon l'invention dans des sièges de type très divers, la partie interne du sac, contenant le générateur de gaz, pouvant être standardisée.

Il n'est donc pas nécessaire, comme dans l'état de la technique, de prévoir un boîtier de logement du module à sac gonflable spécifique à chaque type de siège.

L'encombrement dans le rembourrage de la partie interne du sac et du générateur de gaz est très réduit, ce qui permet de conserver une masse importante de rembourrage autour des éléments internes du module en préservant ainsi le confort du siège.

De plus, la partie externe du sac étalée sur le rembourrage se déforme conjointement avec ce rembourrage ainsi qu'avec la coiffe recouvrant le sac ou cousue avec ce dernier.

## Revendications

1. Agencement d'un module (12) à sac gonflable dans un élément (10) de siège de véhicule automobile, le module (12) comprenant un sac gonflable (24) et un générateur (26) de gaz de gonflage de ce sac, l'élément de siège (10) comprenant un coussin (16) muni d'un rembourrage (20), **caractérisé en ce que** le sac (24) comprend une partie (24I), interne au rembourrage (20), qui est reliée au générateur de gaz (26), et une partie (24E), externe au rembourrage (20), comportant au moins une poche (28, 30; 36) qui est destinée à se déployer par gonflage et qui est, avant gonflage, étalée sur le rembourrage (20) de manière à le recouvrir sur une surface la plus grande possible par aplatissement de la poche (28, 30; 36) dégonflée pour épouser la forme générale du rembourrage (20).

2. Agencement selon la revendication 1, **caractérisé en ce que** la partie externe étalée (24E) du sac est au moins partiellement logée dans un évidement (32) ménagé dans le contour du rembourrage, de manière à affleurer ce contour.

3. Agencement selon la revendication 1 ou 2, **caractérisé en ce que** le générateur de gaz (26) est logé dans la partie interne (24I) du sac.

4. Agencement selon l'une quelconque des revendications 1 à 3, **caractérisé en ce que** l'élément de siège (10) comprend une coiffe (22) recouvrant le rembourrage (20), et **en ce que** la partie externe étalée (24E) du sac est interposée entre le rembourrage (20) et la coiffe (22).

5. Agencement selon la revendication 4, **caractérisé en ce que** la coiffe (22) comprend une couture frangible (34) qui s'étend au droit de la partie externe étalée (24E) du sac et qui est destinée à se déchirer lors du gonflage de ce sac.

6. Agencement selon l'une quelconque des revendications 1 à 3, **caractérisé en ce que** l'élément de siège (10) comprend une coiffe (22) recouvrant le rembourrage (20), et **en ce que** la partie externe (24E) du sac forme une pièce (38) de cette coiffe reliée au reste de la coiffe par des coutures frangibles (40) destinées à se déchirer lors du gonflage du sac.

7. Agencement selon l'une quelconque des revendications précédentes, **caractérisé en ce que** la partie externe (24E) du sac comprend au moins deux poches successives (28, 30; 36), une des poches communiquant avec la partie interne (24I) du sac par l'intermédiaire de l'autre poche.

8. Agencement selon l'une quelconque des revendications précédentes, **caractérisé en ce que** l'élément de siège est un dossier (10) muni d'au moins un bourrelet latéral (18) sur lequel est étalée la partie externe (24E) du sac.

9. Agencement selon la revendication 8, **caractérisé en ce que** la partie externe (24E) du sac est munie d'au moins une poche (28, 30) qui, après gonflage, a une forme générale ovoïde allongée sensiblement verticalement, cette poche (28, 30) assurant une protection latérale du thorax d'un occupant assis dans le siège.

10. Agencement selon la revendication 9, **caractérisé en ce que** la poche (28, 30) est munie d'une extrémité supérieure communiquant avec une poche supplémentaire (36), ayant par exemple une forme générale prismatique après gonflage, assurant une protection latérale de la tête de l'occupant.

## Patentansprüche

1. Anordnung eines Airbag-Moduls (12) in einem Element (10) eines Kraftfahrzeugsitzes, welches Modul (12) einen Airbag (24) und einen Gasgenerator (26) für das in den Airbag einzublasende Gas umfasst, welches Sitzelement (10) ein Kissen (16) umfasst, das mit einem Polster (20) versehen ist, **dadurch gekennzeichnet, dass** der Airbag (24) einen in dem Polster (20) liegenden Teil (24I) aufweist, der mit dem Gasgenerator (26) verbunden ist, sowie einen außerhalb des Polsters (20) angeordneten Teil (24E), der mindestens eine Tasche (28, 30; 36) umfasst, die dazu bestimmt ist, sich durch Aufblasen zu entfalten, und die vor dem Aufblasen so auf dem Polster (20) ausgebreitet ist, dass sie ihn auf einer größtmöglichen Fläche durch Ausbreiten der unaufgeblasenen Tasche (28, 30; 36) bedeckt, um sich im Wesentlichen der Form des Polsters (20) anzupassen.

2. Anordnung nach Anspruch 1, **dadurch gekennzeichnet, dass** der äußere, ausgebreitete Teil (24E) des Airbags zumindest teilweise in einer Ausnehmung (32) untergebracht ist, die im Umriss des Polsters vorgesehen ist, um mit diesem Umriss bündig abzuschließen.

3. Anordnung nach Anspruch 1 oder 2, **dadurch gekennzeichnet, dass** der Gasgenerator (26) im inneren Teil (241) des Airbags untergebracht ist.

4. Anordnung nach einem der Ansprüche 1 bis 3, **dadurch gekennzeichnet, dass** das Sitzelement (10) einen Bezug (22) umfasst, der das Polster (20) bedeckt, sowie dadurch, dass der ausgebreitete äußere Teil (24E) des Airbags zwischen dem Polster (20) und dem Bezug (22) angeordnet ist.

5. Anordnung nach Anspruch 4, **dadurch gekennzeichnet, dass** der Bezug (22) eine Sollbruch-Naht (34) umfasst, die sich im Bereich des äußeren, ausgebreiteten Teils (24E) des Airbags erstreckt und dazu bestimmt ist, beim Aufblasen des Airbags zu platzen.

6. Anordnung nach einem der Ansprüche 1 bis 3, **dadurch gekennzeichnet, dass** das Sitzelement (10) einen Bezug (22) umfasst, der das Polster (20) bedeckt, sowie dadurch, dass der äußere Teil (24E) des Airbags einen Teil (38) dieses Bezugs bildet, der mit dem übrigen Bezug über Sollbruch-Nähte (40) verbunden ist, die beim Aufblasen des Airbags platzen sollen.

7. Anordnung nach einem der vorstehenden Ansprüche, **dadurch gekennzeichnet, dass** der äußere Teil (24E) des Airbags mindestens zwei aufeinanderfolgende Taschen (28, 30; 36) umfasst, wobei eine der Taschen über die andere Tasche mit dem inneren Teil (241) des Airbags verbunden ist.

8. Anordnung nach einem der vorstehenden Ansprüche, **dadurch gekennzeichnet, dass** das Sitzelement eine Rückenlehne (10) ist, die mit mindestens einer seitlichen Verdickung (18) versehen ist, auf der der äußere Teil (24E) des Airbags ausgebreitet ist.

9. Anordnung nach Anspruch 8, **dadurch gekennzeichnet, dass** der äußere Teil (24E) des Airbags mit mindestens einer Tasche (28, 30) versehen ist, die nach dem Aufblasen insgesamt eine im Wesentlichen vertikal längliche, eiförmige Form hat, wobei diese Tasche (28, 30) für den Thorax eines auf dem Sitz befindlichen Insassen einen seitlichen Schutz bedeutet.

10. Anordnung nach Anspruch 9, **dadurch gekennzeichnet, dass** die Tasche (28, 30) mit einem oberen Ende versehen ist, das mit einer zusätzlichen Tasche (36) verbunden ist, die nach dem Aufblasen beispielsweise eine im Wesentlichen prismatische Form aufweist, wodurch der Kopf des Insassen seitlich geschützt ist.

## Claims

1. Arrangement of an airbag module (12) in an element (10) of a seat in a motor vehicle, the module (12) comprising an inflatable bag (24) and a gas generator (26) for inflating this bag, the element (10) of the seat comprising a cushion (16) provided with a padding (20), **characterized in that** the bag (24) comprises a part (241), inner to the padding (20), which is connected to the gas generator (26), and a part (24E), outer to the seat padding (20), including at least one pouch (28,30;36) which intended to be deployed by inflation and which is, before inflation, spread over the padding (20) so as to cover it on the biggest possible surface by flattening of the deflated pouch (28,30;36) to follow the general shape of the padding (20).

2. Arrangement according to claim 1, **characterized in that** the spread outer part (24E) of the bag is at least partially located within a recess (32) arranged in the outline of the padding, so as to make flush this outline.

3. Arrangement according to claim 1 or 2, **characterized in that** the gas generator (26) is located inside the inner part (241) of the bag.

4. Arrangement according to any one of claims 1 to 3, **characterized in that** the element (10) of seat comprises a covering larger (22) recovering the padding (20), and **in that** the spread outer part (24E) of the bag is interposed between the padding (20) and the covering layer (22).

5. Arrangement according to claim 5, **characterized in that** the covering layer (22) comprises a frangible seam (34) which extends in the right of the spread outer part (24E) of the bag and which is intended to split during the inflation of this bag.

6. Arrangement according to any one of claims 1 to 3, **characterized in that** the element (10) of the seat comprises a covering layer (22) recovering the padding, and **in that** the outer part (24E) of the bag is a part (38) of this covering layer connected to the rest of the covering layer by frangible seams (40) intended to split during the inflation of the bag.

7. Arrangement according to any one of the preceding claims, **characterized in that** the outer part (24E) of the bag comprises at least two successive pouches (28,30;36), one of the pouches communicating with the inner part (24I) of the bag through the other pouch.

8. Arrangement according to any one of the preceding claims, **characterized in that** the element (10) of the seat is a backrest (10) provided with at least one lateral roll (18) on which is spread the outer part (24E) of the bag.

9. Arrangement according to claim 8, **characterized in that** the outer part (24E) of the bag is provided with at least one pouch (28,30) which, after inflation, has a substantially vertically elongated ovoïde general shape, this pouch (28,30) providing a lateral protection to the thorax of an occupant seated on the seat.

10. Arrangement according to claim 9, **characterized in that** the pouch (28,30) is provided with an upper end communicating with an additional pouch (36), having for instance a prismatic general shape after inflation, providing a lateral protection to the head of the occupant.
